# EUROPEAN PATENT SPECIFICATION

(11) **EP 2 021 304 B1**
(45) Date of publication and mention of the grant of the patent: **31.05.2017**
(21) Application number: 07747588.7
(22) Date of filing: 03.04.2007
(51) Int. Cl.: C05B 7/00, C05B 3/00

(54) **METHOD FOR PRODUCING NITROPHOSPHATE PRODUCTS HIGH IN NITROGEN**
VERFAHREN ZUR HERSTELLUNG VON NITROPHOSPHATPRODUKTEN MIT HOHEM STICKSTOFFGEHALT
PROCEDE DE PRODUCTION DE NITROPHOSPHATES A TENEUR ELEVEE EN AZOTE

(30) Priority: 10.04.2006 NO 20061616
(43) Date of publication of application: 11.02.2009
(73) Proprietor: YARA International ASA, 0130 Oslo (NO)
(72) Inventor: OBRESTAD, Torstein, N-3830 Ulefoss (NO); SNARTLAND, Susanne, N-PORSGRUNN N-3915 (NO)
(74) Representative: Onsagers AS
(86) International application number: PCT/NO2007/000127
(87) International publication number: WO 2007/117151

(56) References cited:
- EP-A- 0 040 122
- GB-A- 1 071 773
- GB-A- 1 098 593
- GB-A- 1 104 253
- GB-A- 1 221 791
- NL-A- 7 317 439
- US-A- 3 366 468

## Description

This invention relates to a method of producing free-flowing, non-oxidising and non-detonable nitrophosphate products high in nitrogen and/or high nitrogen phosphate products with N ≥ 25 and ammonium nitrate < 70 weight%. More precise, the invention relates to a method for producing high N-NP and/or high N-NPK fertilizers.

### Background

A common process for producing nitrogen-phosphate (NP) fertilizers or nitrogen-phosphate-potassium (NPK) fertilisers is the nitrophosphate process, in which rock phosphate is dissolved in excess nitric acid and Ca(NO₃)₂*4H₂O is removed from the digested raw phosphate solution by cooling and filtration. Then, by neutralizing the resulting filtrate, a solution containing mainly ammonium nitrate-ammonium-calcium phosphates is formed. By evaporation of the solution, an AN-MAP-DCP (ammonium nitrate - monoammonium phosphate - dicalcium phosphate) slurry/melt is formed, and which may be added potassium chloride/potassium sulphate salts. By using these starting components and the described process a large range of fertilizer formulas may be provided.

In recent years more and more international focus has been put on safety properties of the NPK grades like ability to detonate, capability to self sustained decomposition and oxidizing power. In the legislation of the International Maritime Organization (IMO) ("Code of safe practice for solid bulk cargoes" and "Recommendations on the transport of dangerous goods" (United Nations)), NPK with more than 70 weight % ammonium nitrate is classified as an oxidizer. So if a NPK contains more than 70 % ammonium nitrate, the NPK product must be tested as to detonation ability and if this test is negative, bulk shipment can take place in special vessels and the product must be stored according to special regulations. The result is increased cost and a less competitive fertiliser product. There is also fear of misuse of fertilizers where ammonium nitrate exceeds 70 % as an explosive. For this reason several markets are reluctant to accept NPK products at all if containing more than 60-65 weight % ammonium nitrate.

The main nitrogen source in fertilisers made by the nitrophosphate process is ammonium nitrate. A content of 65 weight % ammonium nitrate corresponds to a total nitrogen content of 22.7 weight % in the fertilizer formulation. Thus, since 2-3 weight % N units are also originating from MAP/DAP (monoammonium phosphate/ diammonium phosphate), a NPK with 65 weight % ammonium nitrate will normally have less than 25 weight % nitrogen. Thus additional nitrogen containing compounds are needed when the amount of ammonium nitrate in a NPK fertilizer is limited to ≤ 65weight % due to safety. Also, the increased N content should originate from other N sources that preferably are dissolved in the NP solution, prior to evaporation. N sources of current interest are mentioned in Table 1:

**Table 1. N sources**

| N-source | N-content weight % | Melting point °C | Shape |
|---|---|---|---|
| Urea | 46 | 132 | Prilled/granules |
| MAP | 12 | 190 | Granules |
| DAP | 21 | d 155 | Granules |
| KNO₃ | 13,8 | 325 | Prilled Crystalline |
| Ammonium Sulphate | 21 | d 235 | Crystalline |

| | | | |
|---|---|---|---|
| d=decomposes | | | |

The advantages and disadvantages of the compounds present in Table 1 are as follows:

### Urea

Urea is the cheapest N source available and one idea could be to dissolve urea in the NP solution to make an NP-urea melt and then solidify in a prilling tower.

Unfortunately urea and ammonium nitrate are not compatible as these two components form a chemical composition that has a critical humidity around 17-18 weight %. This means the solid product would liquefy in short time when stored.

### MAP/DAP

MAP and DAP are available in the market both as crystalline and granular products. The price of these products (water soluble P source), however, does not make them interesting as an N source in a nitrophosphate process that produces citrate- and water-soluble P.

### KNO₃

Potassium nitrate, KNO₃ is normally an expensive speciality fertiliser but being both a K and a N source, the salt could be of some interest in the nitrophosphate process.

However replacing ammonium nitrate with potassium nitrate would not make any sense regarding safety as the IMO rules say KNO₃ shall be treated as ammonium nitrate if equivalent amounts of ammonium are present. Since nitrophosphate NPK contains MAP/DAP, KNO₃ will be equivalent to ammonium nitrate as to classification.

### Ammonium sulphate

Ammonium sulphate is available in the market first and foremost as a crystalline material. The material is relatively cheap and it is both an N and S source. Since S is agronomically valuable, it would be of great interest to use ammonium sulphate for making a high quality NPK or NP with N ≥ 25 weight %.

The present invention is therefore directed towards finding a method for employing ammonium sulphate in making high quality NPK or NP with N ≥ 25 weight %.

### Prior Art

GB 1,377,875 discloses a method of treating a multi-nutrient fertilizer liable to exothermic decomposition and comprising ammonium nitrate, dicalcium phosphate and a chloride, the method comprises adding from 3 to 25 weight % ammonium sulphate and mono-/diammonium phosphate to provide a proportion of water-soluble phosphate in relation to the total phosphate content from 30 to 70 weight %. According to GB 1,377,875, about 5 weight % ammonium phosphate is necessary to avoid smouldering decomposition in a 13/13/21 fertilizer, and about 10 weight% ammonium phosphate in a 15/15/15 fertilizer. The fertilizer described here is a low nitrogen class fertiliser produced by granulation.

GB 1,221,791 discloses a process for making molten mixtures consisting of ammonium nitrate and ammonium phosphate which comprises reacting, in a first stage, phosphoric acid and/or nitric acid with ammonia, in the presence of nitrate and phosphate ions, the ammonia being used in an amount in excess of that which can be absorbed by the reaction mixture; and contacting in a second stage the ammonia which is not absorbed in the first stage with further nitric acid and/or phosphoric acid intended for use in the first stage; both stages being carried out at the boiling point of the mixture of materials used in that stage and at subatmospheric pressure. Any phosphoric acid which is present is converted into ammonium phosphate having an N : P atomic ratio in the range 0.9:1 to 1.8:1, such as for instance monoammonium phosphate. The N:P₂0₅ weight ratio of the product of the present invention depends on the relative amounts of ammonium nitrate and ammonium phosphate in the product and may vary from 1:2 to 3:1. The product desirably contains at least 10% by weight of ammonium phosphate. The water content of the product of the present invention is suitably in the range 0.05% to 4% by weight and is preferably in the range 0.1% to 1% by weight. Sulphuric acid may also be present if desired but the amount of sulphuric acid is preferably less than 20% by weight based on the weight of the reaction mixture.

US 3,366,468 discloses a method rendering fertilizer grade ammonium nitrate resistant to flame and insensitive to detonation by adding thereto 5 to 10 % of ammonium phosphate or a mixture thereof with potassium chloride or ammonium sulphate. The product obtained is an integral, intimate and uniform mixture of the ingredients and is highly resistant to flame and insensitive to detonation.

Thus there is a need for safe NP or NPK fertilizers containing above 25 weight % N. Advantageously, the NP or NPK fertilizers preferably also show a low caking tendency and high particle strength to enable storing and shipment without sintering or dust formation.

### Objective of the invention

The main objective of this invention is to develop a method suitable for use in the prilling nitrophosphate process to produce NPKs or NPs preferably with ≥ 25 weight % nitrogen and a total ammonium nitrate content ≤ 70 weight %, and which are neither oxidizers nor show abilities to detonate in official IMO tests.

A further objective is to arrive at NPK/NP products that have high physical quality for bulk shipping worldwide, that is the NPK or NP products should have a sufficiently low caking tendency and particle strength to stand a pressure of 1 kg/cm² for three months at a temperature of 30-35 °C without sintering or formation of dust.

These and other objectives of the invention are achieved by the features disclosed in the description of the invention and/or the patent claims.

### Description of the invention

The inventors have discovered that by using ammonium sulphate as an additive, eventually in addition to one or more potassium chloride/potassium sulphate salts, to an AN-MAP (ammonium nitrate - monoammonium phosphate) slurry/melt shortly before particulation, it is possible to provide high N-NP or high N-NPK fertilizer preferably with N ≥ 25 weight % having less than 70 weight % AN, and which exhibits physical qualities enabling safe bulk shipping worldwide. The slurry/melt may also comprise DAP-DCP (diammonium phosphate - dicalcium phosphate), and additional components in minor quantities.

The invention concerns a method for producing non-oxidizing high N-NP or high N-NPK fertilizers having N ≥ 25 weight %, comprising forming a melt/slurry containing ammonium nitrate and monoammonium phosphate and less than 2 weight % water, the method being characterized in that shortly before particulation of the melt,
in case of producing high N-NP fertilizers,
solid ammonium sulphate and from 0.1 to 10 weight% of a water binding agent are added to obtain an overall composition of the melt such that N ≥ 25 weight % and ammonium nitrate is < 70 weight %,
or in case of producing high N-NPK fertilizers,
solid ammonium sulphate, from 0.1 to 10 weight% of a water binding agent and at least one solid potassium salt are added to obtain an overall composition of the melt such that N ≥ 25 weight % and ammonium nitrate < 70 weight %, and then the melt is particulated to form solid particles.

Thus the invention concerns a method for producing high N-NP or high N-NPK fertilizer preferably with N ≥ 25 weight % having less than 70 weight % AN, from a melt comprising ammonium nitrate, ammonium phosphate, optionally also DAP, DCP and minor quantities of other components. Solid AS is mixed into an almost water free NP melt either alone or together with a potassium salt, where after the melt is particulated preferably by prilling. The water content of the melt is kept less than 2 weight %, preferable less than 1 weight %. The melt has N/P > 2.1 (equals N/P₂O₅ > 0.9) and Ca/P< 1, preferably 0.3-0.7. The potassium salt is KCl or K₂SO₄ or a mixture of these.

AS is added as crystalline or crushed, having a particle size with d50 in the range of 0.10- 0.90 mm, preferably 0.40 -0.60 mm. In addition 0.1 to 10 weight % reactive, preferably 0.2 - 1 weight %, finely divided MgO, CaO or other strongly water binding agent is added to the melt. The average particle size is preferably 0.2-3.0 mm. The total amount of salt mixed into the melt should be less than 52 weight %, preferably less than 45 weight %.

A high N-NPK/NP free flowing, prilled product is obtained wherein the nitrogen content is between 25-29 weight % with a NO₃-N content < 12.2 weight %, preferably < 11.4 weight %, and water soluble P is ≥ 45% and citric soluble P is ≥ 95% and total content of ammonium sulphate is less than 30 weight %, preferably less than 22 weight %. The content of K₂O will normally vary between 0 and 10 %. Sulphur content will be defined by the amount of AS and/or other sulphur sources used (kiseritt, SOP etc).

The prilling process is preferred because it is a well known process giving solid particles with small water contents. In the nitrophosphate prilling process an ammonium nitrate-ammonium phosphate (NP) solution is converted into a melt containing less than 2 weight %, preferably 1 weight % water by evaporation. The potassium salt is added into the melt, in a mixer at 135-170 °C prior to prilling in a spinning bucket. With the right NP composition it is possible to add up to approximately 50 weight % solid material (recycled material and salt) prior to prilling. For further description of the prilling process, it is referred to "Ullmann's Encyclopaedia of Industrial Chemistry", Vol. A19, pp.447-452, 1991.

### Verification of the invention

The inventors have performed a series of experiments in order to verify the effect of the invention. First it was tried substituting ammonium nitrate with ammonium sulphate prior to evaporation and prilling.

### Experiment 1A comparative

A NP solution with N/P ratio 6.1 was made from AN, MAP, DAP, CaHPO₄ and 15-16 weight % water. Ph was adjusted to 5.8 by using ammonia. The solution was heated until boiling at appr. 130 °C. Reflux was used in order not to loose water. 10, 20 and 30 weight % finely divided AS (particle size d50 less than 0.2mm) (based on dry material in NP solution) was added to the NP solution while stirring. The NP-AS slurry/solution was evaporated under vacuum to a water content of 0.5 weight % (0.2 Bar and temp. of 180 °C) to make a NP-AS melt.

The following observations were made. It was not possible to dissolve all the crystals at the two highest AS levels. Viscosity of the NP-AS slurry at 170 °C was found to be 70 and 85 cP when containing 20 and 30 weight % AS, respectively. These values were 30 and 40 % higher than viscosity of melt without AS. The NP-AS melt compositions could still be pumped but solid material was depositing on the walls and consequently there would be a large risk of getting deposits in the evaporators of the plant and possible clogging of pipes.

### Experiment 1B comparative

Prilled NP 29-06 (a product comprising 29 weight% N and 6 weight% P₂O₅) can be produced in the nitrophosphate process by evaporating a NP solution (N/P= 11) into a NP melt containing 81 weight % AN, 5.3 weight % MAP, 0.6 weight % DAP, 5.3 weight % CaHPO₄ and 0.5 weight % water and 7.3 weight % filler prior to prilling. In order to reduce the AN content down to ≤ 70, the following trial was carried out: A NP solution (N/P= 11) containing 68.6 weight % AN, 5.3 weight % MAP, 0.6 weight % DAP, 6.3 weight % CaHPO₄, and 20 weight % water was kept at 120-125 °C while adding up to 16 weight % finely divided AS during stirring (16 weight % of dry material in a NP solution). The slurry/solution was then made to boil to evaporate the water in order to make a melt with 0.5 weight % water for prilling. The following observations were made. As water content was reduced viscosity increased and deposits were formed on the walls of the evaporator. Viscosity at 170 °C and 0.5 weight % water was 41cP. X-ray diffraction of deposits showed undissolved AS.

Again it was concluded too risky to use this procedure in the plant as serious deposits on heating coils and in pipes would eventually block the plant. Experiment 1A and 1B indicates that it is not possible to add AS to a NP solution prior to evaporation and prilling. It was then decided to investigate adding crystalline ammonium sulphate to NPK melt prior to prilling, but after evaporation.

### Experiment 2A comparative

In the nitrophosphate prilling process KCl/K₂SO₄ is mixed into water free NP melt for approximately 20 sec. prior to prilling. Prilled NPK 20-11-7,5 can be manufactured by prilling a melt/slurry consisting of 53 weight % AN, 12 weight % MAP, 0.7 weight % DAP, 6 weight % CaHPO₄ and 12 weight % KCl, together with 16 weight % filler (non reactive dolomitt).

In this experiment, a NP melt consisting of 65.8 weight % AN, 21.9 weight % MAP, 1.3 weight % DAP, 11 weight % CaHPO₄ at 160 °C was mixed thoroughly in a small container for 20 seconds, with finely divided crystalline AS and filler to give an overall slurry composition of 20 weight % N, 11 weight % P₂O₅, 7.5 weight % K₂O and 7 weight % S sec. (appr. 30 weight % AS). Afterwards, the slurry/melt was added onto a cold metal plate where it immediately solidified. Surprisingly the solidification time was not significantly longer than for the melt of NPK 20-11-7,5 without AS.

### Experiment 2B comparative

Encouraged by the results in experiment 2A a plant trial was carried out. A NP melt consisting of 86.7 weight % AN, 9.5 weight % MAP, 0.6 weight % DAP and 3.1weight % CaHPO₄, at 165 °C, was thoroughly mixed in the plant mixer with finely divided AS (d 50= 0,15mm) and KCl to give an overall composition of NPK 27-05-05 and having close to 12.5 weight % AS. After 20 seconds of mixing the slurry/melt was prilled. AS added to melt: 15.8 kg per 100 kg of melt. KCl added to melt: 10.1 kg per 100 kg of melt.

Nice, round particles were formed in the prilling tower, the particles were treated with anti caking agent. The particles had the following properties:
- pH (1+9): 4.4 (1+9 means 1 part of product and 9 parts of water)
- Bulk density: 0.97 kg/l
- Crushing strength: 4.5 kg (particles having a diameter of 2 mm)
- Laboratory caking index: 950-1000 (>1000 is not acceptable)
- Water content: 0.50 weight % (gravimetric method)

Analysis of the particles showed the following composition: 27 weight % N, 5 weight % P₂O₅, 5 weight % K₂O and 3.0 weight % S.

The laboratory caking index is an internally defined test were the product is exposed to a pressure of lkg/cm2 and humid air. Indexes above 1000 are not acceptable.

To test stability of the NPK product a swelling test was carried out in which 2 kg of the prilled material was stored for 2 days at 60 °C, in a closed plastic container. Increase in specific volume would reveal tendency to post reaction, caking and disintegration of the product over time. The swelling test showed an increase in the specific volume, ΔV of 15 %. A ΔV of 0-3% means a very low tendency to post reactions during storage, ΔV of 3-7% means some risk of post reactions, ΔV of 7-15% means substantial risk of post reactions, and ΔV ≥ 15% means a very unstable product.

Thus the swelling test indicated post reactions in the product, which was confirmed by X-ray diffraction before and after the swelling test. The X-ray diffraction showed that the following reactions were present in the prilled material:
AN + AS → 2AN*AS (double salt formation), and
AN + AS → 3AN*AS -""-

These chemical reactions result in volume expansion, caking and disintegration of the particles, and the crystalline AS was observed to have a very corrosive effect on steel.

Experiment 2B gave the following observation: NPK 27-5-5 can be manufactured by adding crystalline AS but particles are very unstable. Solid, crystalline AS seems to have a corrosive effect on steel.

### Experiment 2C comparative

The reactivity of AS had to be minimized in order to increase the stability of prilled NPK 27-5-5. It was decided to try with AS crystals with a larger particle size. So a new trial was carried out in the plant with the same melt composition and the same amount of KCl and AS, but now AS had d50 = 0.68 mm.

The following observations and test results were made. Properties of product and results of swelling test:
- Ph (1+9) = 4.5
- Bulk density: 0.95 kg/l
- Crushing strength: 4.0 kg (particles with diameter 2 mm)
- Laboratory caking index: 750 (good)
- Water content: 0.46 weight %

Analysis gave the same composition as in Experiment 2B, and the swelling test gave ΔV = 8 %. Thus by increasing particle size of AS, both caking tendency and swelling test gave better values but still the swelling tendency is high and x-ray diffraction could still detect the reactions mentioned in 2B

### Experiment 2D

In order to obtain a lower reactivity of the chemical system, it was decided to lower the water content of the finished product. Lower water content can be obtained by reducing water content of the NP melt prior to prilling, or by adding water binding agents. A new plant trial was therefore carried out where KC1, AS and active MgO were added to the NP melt in the mixer. The trial was carried out just as described in Experiment 2B but now using AS with d50=0.5 and adding 0.6 weight % active finely divided MgO powder.

The following observations and test results were made. Properties of product and results of swelling test:
- Ph(1+9): 5.0
- Bulk density: 0.95 kg/l
- Crushing strength: 4.5 kg (particles with diameter 2 mm)
- Laboratory caking index: 550 (good)
- Water content: 0.45 weight %

Analysis gave the same composition as in Experiment 2B, and the swelling test gave ΔV = 1.5 %.

### Capability of self sustained decomposition:

Trough tests were carried out according to IMO procedures. In order to classify NPK as a C grade (not capable of self sustaining decomposition), the AN content has to be below 70 % and the product must perform negatively in an open trough defined by IMO. In this trough NPK is heated by flames until decomposition starts. When the heating sources are removed decomposition can go on (positive performance) or stop (negative performance).

The product produced by the method described did not decompose self-sustained nor in open or closed trough. Thus, by adding MgO and relatively coarse AS to a NP melt in a mixer prior to prilling, a high quality NPK 27-5-5 has been produced. This high N-NPK has total content of AN=68.6 weight % meaning it will not be classified as an oxidizer according to IMO rules. Also, adding MgO to the AS salt strongly reduced the corrosive effect of AS on steel.

### Experiment 2E

An NP melt consisting of 87.3 weight % AN, 0.6 weight % DAP, 8 weight % MAP and 4 weight % CaHPO₄ at 180 °C was mixed thorough with 12.3 kg KCl, 15.8 weight % AS and 0.7 kg MgO per 100 kg of melt. Mixing time was approximately 20 seconds prior to prilling.

The following observations and test results were made. Properties of product and results of swelling test:
- Ph(1+9): 5.1
- Bulk density: 0.94 kg/l
- Crushing strength: 4.3 kg
- Laboratory caking index: 600 (good)
- Water content: 0.44 weight %

Analysis gave the following composition: 27 weight % N, 5.7 weight % P₂O₅, 6 weight % K₂O and 3 weight % S. The swelling test gave ΔV= 0.8 %.

Thus by mixing AS with d50=0.5 mm and 0.5-0.6 weight % MgO into the given NP melt at 180 °C prior to prilling a product NPK 27-6-6 had been produced, having 67.4 weight % AN. This means the product will not be classified as an oxidizer according to IMO. Also, the product has excellent physical quality as proven by a standard bag test.

In addition to the laboratory caking test, there is also a standard bag test which have been carried out on all high N-NPKs and the finished grades, and which all resulted in indexes from 1 to 3 (see explanation below).

The standard bag test are reported with the following indexes: Free flowing material, index 1; weakly sintered material, index 2; moderately caked material that loosen by moving the bag up and down, index 3; and strongly caked material, not acceptable, index 4. The standard bag test is performed as follows: tight bags (25 kg, four bags) of finished fertilizer are stored in a stack together with 1 bag of uncoated fertilizer and subjected to a pressure of 1 kg/cm² for three months. In the tests carried out on high N-NPKs the temperature has fluctuated between 15 and 25 °C. After three months the bags have been evaluated as to degree of caking and each bag gets a caking index.

### Capability of self sustained decomposition:

Trough tests were carried out according to IMO procedures. The product in this experiment performed negatively in IMO trough tests, both in open and closed troughs. The product was also tested in a detonation test defined by IMO. The result was negative.

### Experiment 2F

A NP melt at 180 °C, consisting of 87.4 weight % AN, 7.2 weight % MAP, 0.4 weight % DAP and 4.9 weight % CaHPO₄ was mixed thoroughly for 20 seconds with crystalline KCl, AS and MgO in the plant mixer. The amounts of salt used were 22.5 kg KCL, 20.2 kg AS (d50=0.50) and 0.7 kg MgO per 100 kg of NP melt.

The slurry was prilled with a slurry temp between 145 -155 °C.

The following observations and test results were made. Properties of product:
- Bulk density: 0.96 kg/l
- Crushing strength: 4.0 kg
- Laboratory caking index: 650 (good)
- Water content: 0.40 weight %

Analysis gave the following composition: 25 weight % N, 5 weight % P₂O₅, 9.8 weight % K₂O, and 3.4 weight % S. The swelling test gave ΔV= 0.2%. The test on capability of self sustained decomposition was negative in both open and closed troughs. The detonation test was also negative. The product did not detonate in IMO detonation test.

Thus, by mixing crystalline KCl, AS and MgO powder into the specified NP melt a high quality NPK 25-5-10 has been produced. The grade has 60.7 weight % AN, and will thus not be classified as an oxidizer.

### Experiment 2G

Same procedure as in Experiments 2B -2F, but now a NP melt was mixed with crystalline AS, and MgO to give NP28-7 + 5S.

Analysis gave the following composition: 27.6 weight % N, 2.6 weight % tot P, 4.6weight % S (60.6 weight % AN, 19 weight % AS, 1 weight % MgO)

Physical properties are still very good.

The examples given describe a procedure for using the nitrophosphate prilling process to manufacture NPK high in N (≥ 25 weight %) and with excellent physical properties without exceeding the 70 weight % AN content which by IMO is set to be the limit for NPK oxidizers. By using this procedure some high N-NPKs (≥ 25 weight %) can be made without exceeding 65 weight %.

Further it has been proven that the obtained formulas are not capable of self-sustained decomposition according to official trough tests (open and closed troughs).

## Claims

1. Method for producing non-oxidizing high N-NP or high N-NPK fertilizers having N ≥ 25 weight %, comprising forming a melt/slurry containing ammonium nitrate and monoammonium phosphate and less than 2 weight % water, the method being **characterized in that** shortly before particulation of the melt,
in case of producing high N-NP fertilizers, solid ammonium sulphate and from 0.1 to 10 weight% of a water binding agent are added to obtain an overall composition of the melt such that N ≥ 25 weight % and ammonium nitrate is < 70 weight %, or
in case of producing high N-NPK fertilizers, solid ammonium sulphate, from 0.1 to 10 weight% of a water binding agent and at least one solid potassium salt are added to obtain an overall composition of the melt such that N ≥ 25 weight % and ammonium nitrate < 70 weight %,
and then the melt is particulated to form solid particles.

2. Method according to claim 1,
**characterized in that**
- water content of the melt before addition of the ammonium sulphate, or the ammonium sulphate and the potassium salt is less than 1 weight %, and
- the solid ammonium sulphate has a particle size with d50 in the range of 0.10-0.90 mm.

3. Method according to claim 1 or 2,
**characterized in that**
- the melt/slurry also comprises diammonium phosphate, dicalcium phosphate, and minor quantities of other components before addition of the ammonium sulphate or the ammonium sulphate and the at least one potassium salt.

4. Method according to claim 1 or 2,
**characterized in that**
- the melt has N/P₂O₅ > 0.9, and
- Ca/P < 1, preferably 0.3-0.7.

5. Method according to claim 1 or 2,
**characterized in that**
the potassium salt is KCl, K₂SO₄, or a mixture of these.

6. Method according to claim 1 or 2,
**characterized in that**
ammonium sulphate particles are having a particle size with d50 in the range of 0.40-0.60 mm.

7. Method according to claim 1,
**characterized in that**
the water binding agent is 0.2 - 1 weight % finely divided MgO and/or CaO.

8. Method according to claim 7,
**characterized in that**
the average particle size of the MgO-particles is 0.2-3.0 mm.

9. Method according to claim 1 or 2,
**characterized in that**
the total amount of salt mixed into the melt is less than 52 weight %, preferably less than 45 weight %.

10. Method according to any of the preceding claims,
**characterized in that**
the melt is particulated by prilling.

11. Free flowing prilled High N-NPK or high N-NP fertilizers granules comprising ammonium sulphate,
**characterized in that**
- the nitrogen content is between 25-29 weight % with a NO₃-N content less than 12.2 weight%, preferably less than 11.4 weight%,
- water soluble P is ≥ 45 % and citric soluble P is ≥ 95 %,
- total content of ammonium sulphate is less than 30 weight%, preferably less than 22 weight%, and
- content of a water binding agent is from 0.1 to 10 weight%.

12. Non-oxidizing high N-NP or high N-NPK fertilizers having N ≥ 25 weight %, further comprising, in case of high N-NP fertilizers: solid ammonium sulphate and from 0.1 to 10 weight% of a water binding agent, and in case of high N-NPK fertilizers: solid ammonium sulphate, from 0.1 to 10 weight% of a water binding agent and at least one solid potassium salt, prepared by the method according to any one of claims 1 to 10.

13. Non-oxidizing high N-NP or high N-NPK fertilizers according to claim 12, wherein the water binding agent is 0.2 - 1 weight % finely divided MgO and/or CaO.

## Patentansprüche

1. Verfahren zur Herstellung von nicht-oxidierenden
Düngemitteln mit hohem N-NP-Gehalt oder hohem N-NPK-Gehalt mit N ≥ 25 Gewichts-%, umfassend das Bilden einer Schmelze / eines Schlamms, die/der Ammoniumnitrat und
Monoammoniumphosphat und weniger als 2 Gewichts-% Wasser enthält, wobei das Verfahren **dadurch gekennzeichnet ist, dass** kurz vor der Formung von Partikeln aus der Schmelze
im Fall der Herstellung von Düngemitteln mit hohem N-NP-Gehalt festes Ammoniumsulfat und 0,1 bis 10 Gewichts-% eines wasserbindenden Mittels zugegeben werden, um eine derartige Gesamtzusammensetzung der Schmelze zu erzielen, dass N ≥ 25 Gewichts-% beträgt und Ammoniumnitrat < 70 Gewichts-% beträgt, oder
im Fall der Herstellung von Düngemitteln mit hohem N-NPK-Gehalt festes Ammoniumsulfat, 0,1 bis 10 Gewichts-% eines wasserbindenden Mittels und wenigstens ein festes Kaliumsalz zugegeben werden, um eine derartige Gesamtzusammensetzung der Schmelze zu erzielen, dass N ≥ 25 Gewichts-% beträgt und Ammoniumnitrat < 70 Gewichts-% beträgt,
und anschließend die Schmelze zu Partikeln geformt wird, um feste Partikel zu bilden.

2. Verfahren nach Anspruch 1,
**dadurch gekennzeichnet, dass**
- der Wassergehalt der Schmelze vor der Zugabe des Ammoniumsulfats oder des Ammoniumsulfats und des Kaliumsalzes weniger als 1 Gewichts-% beträgt, und
- das feste Ammoniumsulfat eine Partikelgröße mit einem d50-Wert im Bereich von 0,10 bis 0,90 mm aufweist.

3. Verfahren nach Anspruch 1 oder 2,
**dadurch gekennzeichnet, dass**
- die Schmelze / der Schlamm vor der Zugabe des Ammoniumsulfats oder des Ammoniumsulfats und des wenigstens einen Kaliumsalzes auch Diammoniumphosphat, Dicalciumphosphat und geringfügige Mengen an anderen Komponenten enthält.

4. Verfahren nach Anspruch 1 oder 2,
**dadurch gekennzeichnet, dass**
für die Schmelze Folgendes gilt:
- N/P₂O₅ > 0,9 und
- Ca/P < 1, vorzugsweise 0,3 bis 0,7.

5. Verfahren nach Anspruch 1 oder 2,
**dadurch gekennzeichnet, dass**
es sich bei dem Kaliumsalz um KCl, K₂SO₄ oder eine Mischung von diesen handelt.

6. Verfahren nach Anspruch 1 oder 2,
**dadurch gekennzeichnet, dass**
die Ammoniumsulfatpartikel eine Partikelgröße mit einem d50-Wert im Bereich von 0,40 bis 0,60 mm aufweisen.

7. Verfahren nach Anspruch 1,
**dadurch gekennzeichnet, dass**
es sich bei dem wasserbindenden Mittel um 0,2 bis 1 Gewichts-% fein verteiltes MgO und/oder CaO handelt.

8. Verfahren nach Anspruch 7,
**dadurch gekennzeichnet, dass**
die durchschnittliche Partikelgröße der MgO-Partikel 0,2 bis 3,0 mm beträgt.

9. Verfahren nach Anspruch 1 oder 2,
**dadurch gekennzeichnet, dass**
die der Schmelze beigemischte Gesamtmenge an Salz weniger als 52 Gewichts-%, vorzugsweise weniger als 45 Gewichts-% beträgt.

10. Verfahren nach einem der vorhergehenden Ansprüche,
**dadurch gekennzeichnet, dass**
die Schmelze durch Sprühkristallisation zu Partikeln geformt wird.

11. Rieselfähiges, sprühkristallisiertes Düngemittelgranulat mit hohem N-NPK-Gehalt oder hohem N-NP-Gehalt, das Ammoniumsulfat enthält,
**dadurch gekennzeichnet, dass**
- der Stickstoffgehalt zwischen 25 und 29 Gewichts-% liegt, wobei der NO₃-N-Gehalt weniger als 12,2 Gewichts-%, vorzugsweise weniger als 11,4 Gewichts-% beträgt,
- das wasserlösliche P ≥ 45 % ausmacht und das zitronensäurelösliche P ≥ 95 % ausmacht,
- der Gesamtgehalt an Ammoniumsulfat weniger als 30 Gewichts-%, vorzugsweise weniger als 22 Gewichts-% beträgt, und
- der Gehalt an einem wasserbindenden Mittel 0,1 bis 10 Gewichts-% beträgt.

12. Nicht-oxidierende Düngemittel mit hohem N-NP-Gehalt oder hohem N-NPK-Gehalt mit N ≥ 25 Gewichts-%, ferner umfassend im Fall von Düngemitteln mit hohem N-NP-Gehalt: festes Ammoniumsulfat und 0,1 bis 10 Gewichts-% eines wasserbindenden Mittels, und im Fall von Düngemitteln mit hohem N-NPK-Gehalt: festes Ammoniumsulfat, 0,1 bis 10 Gewichts-% eines wasserbindenden Mittels und wenigstens ein festes Kaliumsalz, hergestellt durch das Verfahren nach einem der Ansprüche 1 bis 10.

13. Nicht-oxidierende Düngemittel mit hohem N-NP-Gehalt oder hohem N-NPK-Gehalt nach Anspruch 12, wobei es sich bei dem wasserbindenden Mittel um 0,2 bis 1 Gewichts-% fein verteiltes MgO und/oder CaO handelt.

## Revendications

1. Procédé de production de fertilisants non oxydants riches en N-NP ou riches en N-NPK ayant N ≥ 25 % en poids, comprenant la formation d'un bain/d'une bouillie contenant du nitrate d'ammonium et du phosphate de monoammonium et moins de 2 % en poids d'eau, le procédé étant **caractérisé en ce que** peu de temps avant la transformation en particules du bain,
dans le cas de production de fertilisants riches en N-NP, du sulfate d'ammonium solide et de 0,1 à 10 % en poids d'un agent de liaison à l'eau sont ajoutés pour obtenir une composition globale du bain telle que N ≥ 25 % en poids et le nitrate d'ammonium est < 70 % en poids, ou
dans le cas de production de fertilisants riches en N-NPK, du sulfate d'ammonium solide, de 0,1 à 10 % en poids d'un agent de liaison à l'eau et au moins un sel de potassium solide sont ajoutés pour obtenir une composition globale du bain telle que N ≥ 25 % en poids et le nitrate d'ammonium < 70 % en poids,
puis le bain est transformé en particules pour former des particules solides.

2. Procédé selon la revendication 1,
**caractérisé en ce que**
- la teneur en eau du bain avant ajout du sulfate d'ammonium, ou du sulfate d'ammonium et du sel de potassium est inférieure à 1 % en poids, et
- le sulfate d'ammonium solide a une taille de particule avec d50 dans la plage de 0,10 à 0,90 mm.

3. Procédé selon la revendication 1 ou 2,
**caractérisé en ce que**
- le bain/la bouillie comprend également du phosphate de diammonium, du phosphate de dicalcium, et des quantités mineures d'autres composants avant ajout du sulfate d'ammonium ou du sulfate d'ammonium et de l'au moins un sel de potassium.

4. Procédé selon la revendication 1 ou 2,
**caractérisé en ce que**
- le bain a N/P₂O₅ > 0,9, et
- Ca/P < 1, de préférence 0,3 à 0,7.

5. Procédé selon la revendication 1 ou 2,
**caractérisé en ce que**
le sel de potassium est KCl, K₂SO₄, ou un mélange de ceux-ci.

6. Procédé selon la revendication 1 ou 2,
**caractérisé en ce que**
les particules de sulfate d'ammonium ont une taille de particule avec d50 dans la plage de 0,40 à 0,60 mm.

7. Procédé selon la revendication 1,
**caractérisé en ce que**
l'agent de liaison à l'eau est 0,2 à 1 % en poids de MgO et/ou de CaO finement divisés.

8. Procédé selon la revendication 7,
**caractérisé en ce que**
la taille de particule moyenne des particules de MgO est de 0,2 à 3,0 mm.

9. Procédé selon la revendication 1 ou 2,
**caractérisé en ce que**
la quantité totale de sel mélangé dans le bain est inférieure à 52 % en poids, de préférence inférieure à 45 % en poids.

10. Procédé selon l'une quelconque des revendications précédentes,
**caractérisé en ce que**
le bain est transformé en particules par grelonage.

11. Granules de fertilisants riches en N-NPK ou riches en N-NP en billes à écoulement libre comprenant du sulfate d'ammonium,
**caractérisés en ce que**
- la teneur en azote est entre 25 et 29 % en poids avec une teneur en NO₃-N inférieure à 12,2 % en poids, de préférence inférieure à 11,4 % en poids,
- P soluble dans l'eau est ≥ 45 % et P soluble dans l'acide citrique est ≥ 95 %,
- la teneur totale en sulfate d'ammonium est inférieure à 30 % en poids, de préférence inférieure à 22 % en poids, et
- la teneur en un agent de liaison à l'eau est de 0,1 à 10 % en poids.

12. Fertilisants non oxydants riches en N-NP ou riches en N-NPK ayant N ≥ 25 % en poids, comprenant en outre, dans le cas de fertilisants riches en N-NP : du sulfate d'ammonium solide et de 0,1 à 10 % en poids d'un agent de liaison à l'eau, et dans le cas de fertilisants riches en N-NPK : du sulfate d'ammonium solide, de 0,1 à 10 % en poids d'un agent de liaison à l'eau et au moins un sel de potassium solide, préparés par le procédé selon l'une quelconque des revendications 1 à 10.

13. Fertilisants non oxydants riches en N-NP ou riches en N-NPK selon la revendication 12, dans lesquels l'agent de liaison à l'eau est 0,2 à 1 % en poids de MgO et/ou de CaO finement divisés.
